# EUROPEAN PATENT SPECIFICATION

(11) **EP 4 483 249 B1**
(45) Date of publication and mention of the grant of the patent: **04.03.2026**
(21) Application number: 22806023.2
(22) Date of filing: 14.11.2022
(51) Int. Cl.: G05D 1/00, G06V 20/40, G06V 20/58, G01C 21/00

(54) **IMPROVED MAPPING FOR A ROBOTIC WORK TOOL SYSTEM**
VERBESSERTES MAPPING FÜR EIN ROBOTISCHES ARBEITSWERKZEUGSYSTEM
CARTOGRAPHIE AMÉLIORÉE POUR UN SYSTÈME D'OUTIL DE TRAVAIL ROBOTISÉ

(30) Priority: 24.02.2022 SE 2250246
(43) Date of publication of application: 01.01.2025
(73) Proprietor: Husqvarna AB, 561 82 Huskvarna (SE)
(72) Inventor: LILJEDAHL, Marcus, 561 82 Huskvarna (SE); JUEL, Jonas, 561 82 Huskvarna (SE)
(86) International application number: PCT/SE2022/051065
(87) International publication number: WO 2023/163624

(56) References cited:
- US-A1- 2014 236 477

## Description

### TECHNICAL FIELD

This application relates to a robotic work tool and in particular to a system and a method for providing an improved mapping for robotic work tools, such as lawnmowers, in such a system.

### BACKGROUND

Automated or robotic work tools, such as robotic lawnmowers, are becoming increasingly more popular and as the robotic work tools become more and more advanced so are the areas they are deployed within as well. The operational areas are not only becoming bigger and bigger, but are also comprising more and more features. This makes the mapping of the area more and more important to enable for a proper operation in the operational area.

The mapping of such complicated areas takes a long time to perform - at least if any accuracy is required, and many systems rely on a server to perform the actual mapping as the mapping data collected - at least in part - by the robotic work tool is vast and requires significant processing power. The data also require significant bandwidth to upload to the server, especially if more than one robotic work tool is operating in the operational area.

As the operational areas are becoming larger and larger and comprising more and more features, the chances of something changing in the area is also increasing. If such changes occur, a remapping might be needed in order to provide accurate navigation in the area. However, such remapping will again require vast computational resources, as well as bandwidth. Furthermore, some mapping systems are based on collecting data over a significant time period and the remapping will therefore also take a significant time to perform.

For example, the international patent application published as WO2021209277A1 discloses a manner of navigating where a map is built based on a combination of input from satellite navigation sensor, the magnetic field and other sensor input (such as odometers and/or accelerometers) and then navigated accordingly along determined paths. The publication discloses a robotic work tool system for defining a working area, i.e. an operational area or part of an operational area, in which at least one robotic work tool subsequently is intended to operate. The system comprises at least one controller being configured to receive sensor data for pose estimation and event data relating to a plurality of events of at least one robotic work tool moving within the working area. The received sensor and event data are associated with each other in time. The controller is configured to determine positions for the events based on the received sensor data associated with the respective event data and to determine features reflecting the working area by relating positions associated with corresponding events with each other. The controller is configured to adjust the determined positions based on the determined features by, for each feature, comparing the respective determined positions with each other; and determine, based on the adjusted positions, a map defining the working area. The controller is also configured to provide a map based on the determined positions. To update such a map, will require collection of a substantial amount of data and processing of this data. And, as discussed above, if the controller is partly or wholly located in a server, the remapping also requires substantial bandwidth.

The patent application published as US20140236477A1 discloses a positioning system and method for determining a position of a machine on a worksite are disclosed. The method may store a map of the worksite which includes one or more known objects in the worksite. The method may determine whether a locating device associated with the machine is accurately providing the position of the machine. The method may also include detecting one or more objects in the worksite. The method may further determine an unmatched object from among the detected objects that does not match the one or more known objects stored in the map. The method may also store the unmatched object in the map as a known object of the worksite.

Thus, there is a need for an improved manner of remapping operational areas reducing the needed bandwidth and processing.

### SUMMARY

It is therefore an object of the teachings of this application to overcome or at least reduce those problems by providing a robotic work tool arranged to operate in an operational area according to a map, the robotic work tool comprising a controller, wherein the controller is configured to: detect an unexpected event; determine a location for the event; determine if a counter corresponds to the location, and if so increase the counter and determine if the counter exceeds an update value, and, if so, trigger a map update, and if no counter corresponds to the location, set a counter corresponding to the location as per the appended claims.

In some embodiments the controller is further configured to determine if a counter corresponds to the location by determining if the location is within an event area of a counter.

In some embodiments the controller is further configured to determine the event area of a counter as the area within an event distance of a first triggering event for that counter.

In some embodiments the controller is further configured to determine the event area of a counter as the area within an event distance of any triggering event for that counter.

In some embodiments the controller is further configured to determine the event area of a counter as the area within an event distance of the center of an area encompassing triggering events for that counter.

In some embodiments the controller is further configured to determine if a counter corresponds to the location by determining if the location is within an event area of a counter and that the counter exceeds a filter value.

In some embodiments the controller is further configured to determine an extension of the map update by determining the extension to be the operational area.

In some embodiments the controller is further configured to determine an extension of the map update by determining the extension to be a work area of the counter.

The controller is further configured to determine an extension of the map update by determining the extension to be the event area of the counter and to determine the extension of the map update by determining if there is a second counter within an update distance that is above a second update threshold and include the area of the second counter in the extension of the map.

In some embodiments the controller is further configured to determine if there is a counter, an enveloped counter, between the triggering counter and the second counter (within the update distance that is above the second update threshold) and include the area (work area or event area) of such an enveloped counter in the update of the map.

In some embodiments the counter is associated with a timer, and wherein the controller is further configured to decrease the counter each time the timer lapses.

In some embodiments the controller is further configured to increase an area counter and determine if the area counter exceeds a second update value and if so trigger a map update of the area corresponding to the area counter.

In some embodiments the unexpected event is detecting a feature at a location not recorded in the map.

In some embodiments the unexpected event is not detecting a feature at a location recorded in the map.

The robotic work tool is a robotic lawnmower.

It is also an object of the teachings of this application to overcome the problems by providing a method for use in a robotic work tool, the method comprising: detecting an unexpected event; determining a location for the event; determining if a counter corresponds to the location, and if so increasing the counter and determining if the counter exceeds an update value, and, if so, triggering a map update, and if no counter corresponds to the location, setting a counter corresponding to the location as per the appended claims.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to some embodiments of the teachings herein;
Figure 1B shows a schematic view of the components of an example of a robotic lawnmower according to some example embodiments of the teachings herein;
Figure 2 shows a schematic view of a robotic lawnmower system according to some example embodiments of the teachings herein;
Figure 3A shows a schematic view of a robotic lawnmower system and a corresponding map according to some example embodiments of the teachings herein;
Figure 3B shows a schematic view of a robotic lawnmower system and a corresponding map according to some example embodiments of the teachings herein;
Figure 3C shows a schematic view of a robotic lawnmower system and a corresponding map according to some example embodiments of the teachings herein;
Figure 3D shows a schematic view of a robotic lawnmower system and a corresponding map according to some example embodiments of the teachings herein;
Figure 4 shows schematic views of three different event areas (indicated by dotted ovals/circles) around combined counters according to some example embodiments of the teachings herein; and
Figure 5 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

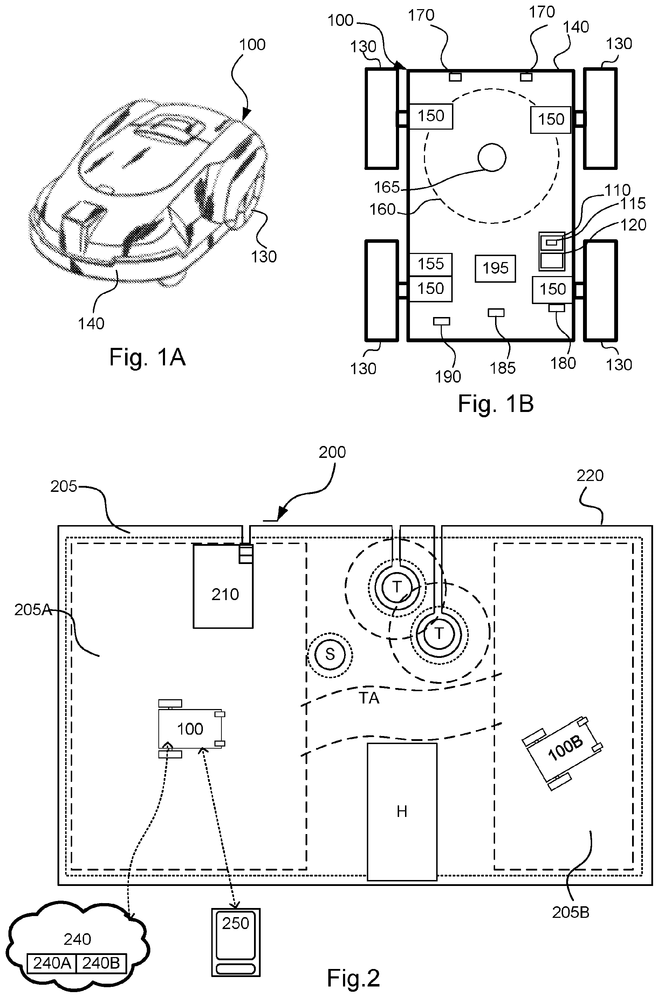

Figure 1A shows a perspective view of a robotic lawnmower 100, having a body 140 and a plurality of wheels 130 (only one side is shown). The robotic lawnmower 100 may be a multi-chassis type or a mono-chassis type (as in figure 1A). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within a work area, where the robotic lawnmower propels itself across or around the work area in a pattern (random or predetermined).

Figure 1B shows a schematic overview of the robotic lawnmower 100. In this example embodiment the robotic lawnmower 100 is of a mono-chassis type, having a main body part 140. The main body part 140 substantially houses all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor. In the example of figure 1B, each of the wheels 130 is connected to a common or to a respective electric motor 155 for driving the wheels 130 to navigate the robotic lawnmower 100 in different manners. The wheels, the motor 150 and possibly the battery 155 are thus examples of components making up a propulsion device. By controlling the motors 150, the propulsion device may be controlled to propel the robotic lawnmower 100 in a desired manner, and the propulsion device will therefore be seen as synonymous with the motor(s) 150.

It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed under figure 1A,

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment 200 as discussed in relation to figure 2 below for providing information regarding status, location, and progress of operation to the user equipment 200 as well as receiving commands or settings from the user equipment 200. Alternatively or additionally, the robotic lawnmower 100 may be arranged to communicate with a server (referenced 240 in figure 2A) for providing information regarding status, location, and progress of operation as well as receiving commands or settings.

The robotic lawnmower 100 also comprises a grass cutting device 160, such as a rotating blade 160 driven by a cutter motor 165. The grass cutting device being an example of a work tool 160 for a robotic work tool 100.

The robotic lawnmower 100 may further comprise at least one navigation sensor, such as an optical navigation sensor, an ultrasound sensor, a beacon navigation sensor and/or a satellite navigation sensor 185. The optical navigation sensor may be a camera-based sensor and/or a laser-based sensor. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device. In embodiments, where the robotic lawnmower 100 is arranged with a navigation sensor, the magnetic sensors 170 as will be discussed below are optional. In embodiments relying (at least partially) on a navigation sensor, the work area may be specified as a virtual work area in a map application stored in the memory 120 of the robotic lawnmower 100. The virtual work area may be defined by a virtual boundary.

The robotic lawnmower 100 may also or alternatively comprise deduced reckoning sensors 180. The deduced reckoning sensors may be odometers, accelerometers or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 100 to navigate with reference to a boundary wire emitting a magnetic field caused by a control signal transmitted through the boundary wire, the robotic lawnmower 100 is, in some embodiments, further configured to have at least one magnetic field sensor 170 arranged to detect the magnetic field and for detecting the boundary wire and/or for receiving (and possibly also sending) information to/from a signal generator (will be discussed with reference to figure 1). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the boundary wire. This enables the controller 110 to determine whether the robotic lawnmower 100 is close to or crossing the boundary wire, or inside or outside an area enclosed by the boundary wire.

As mentioned above, in some embodiments, the robotic lawnmower 100 is in some embodiments arranged to operate according to a map application representing one or more work areas (and possibly the surroundings of the work area(s)) stored in the memory 120 of the robotic lawnmower 100. The map application may be generated or supplemented as the robotic lawnmower 100 operates or otherwise moves around in the work area 205. In some embodiments, the map application includes one or more start regions and one or more goal regions for each work area. In some embodiments, the map application also includes one or more transport areas.

As discussed in the above, the map application is in some embodiments stored in the memory 120 of the robotic working tool(s) 100. In some embodiments the map application is stored in the server (referenced 240 in figure 2A). In some embodiments maps are stored both in the memory 120 of the robotic working tool(s) 100 and in the server, wherein the maps may be the same maps or show subsets of features of the area.

The robotic working tool 100 may also comprise additional sensors 190 for enabling operation of the robotic working tool 100, such as visual sensors (for example a camera), ranging sensors for enabling SLAM-based navigation (Simultaneous Localization and Mapping), moisture sensors, collision sensors, wheel load sensors to mention a few sensors. In particular, in some embodiments, the robotic work tool 100 comprises at least one visual sensor for receiving visual indications that may be interpreted to correspond to movement information.

As discussed in the background section, there are many manners of performing the mapping of an operational area. In some embodiments, the robotic lawnmower 100 is configured to perform the mapping (and also re-mapping) based on the data generated by the navigation sensor 180. In some embodiments, the robotic lawnmower 100 is configured to perform the mapping (and also re-mapping) based on the data generated by the magnetic sensor(s) 170. In some embodiments, the robotic lawnmower 100 is configured to perform the mapping (and also re-mapping) based on the data generated by the deduced reckoning sensor(s) 185.

In some embodiments, the robotic lawnmower 100 is configured to perform the mapping (and also re-mapping) based on the data generated by the navigation sensor 180 in combination with the data generated by the magnetic sensor(s) 170.

In some embodiments, the robotic lawnmower 100 is configured to perform the mapping (and also re-mapping) based on the data generated by the navigation sensor 180 in combination with the data generated by the deduced reckoning sensor(s) 185.

In some embodiments, the robotic lawnmower 100 is configured to perform the mapping (and also re-mapping) based on the data generated by the navigation sensor 180 in combination with the data generated by the magnetic sensor(s) 170.

In some embodiments, the robotic lawnmower 100 is configured to perform the mapping (and also re-mapping) based on the data generated by the deduced reckoning sensor(s) 185 in combination with the data generated by the magnetic sensor(s) 170.

In some embodiments, the robotic lawnmower 100 is configured to perform the mapping (and also re-mapping) based on the data generated by the navigation sensor 180 in combination with the data generated by the deduced reckoning sensor(s) 185 and in combination with the data generated by the magnetic sensor(s) 170.

And, in all such some embodiments for the mapping, the robotic lawnmower 100 is configured to perform the mapping (and also re-mapping) based on any of the data or combination of data mentioned above further in combination with the data generated by the other sensors 190.

In some embodiments, the robotic lawnmower is configured to perform the mapping as in the international patent application published as WO2021209277A1.

Figure 2 shows a robotic lawnmower system 200 in some embodiments. The schematic view is not to scale. The robotic lawnmower system 200 comprises one or more robotic lawnmowers 100 according to the teachings herein. It should be noted that the operational area 205 shown in figure 2 is simplified for illustrative purposes. The robotic lawnmower system comprises a boundary 220 that may be virtual and/or electro mechanical such as a magnetic field generated by a control signal being transmitted through a boundary wire, and which magnetic field is sensed by sensor in the robotic lawnmower 100.

The robotic lawnmower system 200 further comprises a station 210 possibly at a station location. A station location may alternatively or additionally indicate a service station, a parking area, a charging station or a safe area where the robotic lawnmower may remain for a time period between or during operation session.

The one or more robotic lawnmowers 100 of the robotic lawnmower system 200 are arranged to operate in an operational area 205, which in this example comprises a first work area 205A and a second work area 205B connected by a transport area TA. However, it should be noted that an operational area may comprise a single work area or one or more work areas, possibly arranged adjacent for easy transition between the work areas, or connected by one or more transport paths or areas, also referred to as corridors. In the following work areas and operational areas will be referred to interchangeably, unless specifically indicated.

The operational area 205 is in this application exemplified as a garden, but can also be other work areas as would be understood, such as an airfield. As discussed above, the garden may contain a number of obstacles, for example a number of trees, stones, slopes and houses or other structures.

In some embodiments the robotic lawnmower is arranged or configured to traverse and operate in work areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in a work area that contains obstacles that are not easily discerned from the ground. Examples of such are grass or moss covered rocks, roots or other obstacles that are close to ground and of a similar colour or texture as the ground. The robotic lawnmower is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 205 exemplified with referenced to figure 2, may thus be such a non-uniform work area as disclosed in this paragraph that the robotic lawnmower is arranged to traverse and/or operate in.

As shown in figure 2, the robotic working tool(s) 100 is arranged to navigate in one or more work areas 205A, 205B, possibly connected by a transport area TA.

The robotic working tool system 200 may alternatively or additionally comprise or be arranged to be connected to a server 240, such as a cloud service, a cloud server application or a dedicated server 240. The connection to the server 240 may be direct from the robotic working tool 100, direct from a user equipment 250, indirect from the robotic working tool 100 via the service station 210, and/or indirect from the robotic working tool 100 via the user equipment 250.

As a skilled person would understand that a server, a cloud server or a cloud service may be implemented in a number of ways utilizing one or more controllers 240A and one or more memories 240B that may be grouped in the same server or over a plurality of servers.

In the below several embodiments of how a map of an operational area may be adapted will be disclosed. It should be noted that all embodiments may be combined in any combination providing a combined adaptation of the map.

The inventors have realized that in order to reduce the bandwidth and processing power, as well as electrical power, needed for remapping the operational area as changes are detected, the robotic lawnmower is to be configured to determine whether a change has actually occurred signifying a real change of the operational area or if a temporary situation has given rise to an unexpected change in the operational area. The inventors have also realized that this can be done by keeping a counter for detected change(s) in order to validate a detected change.

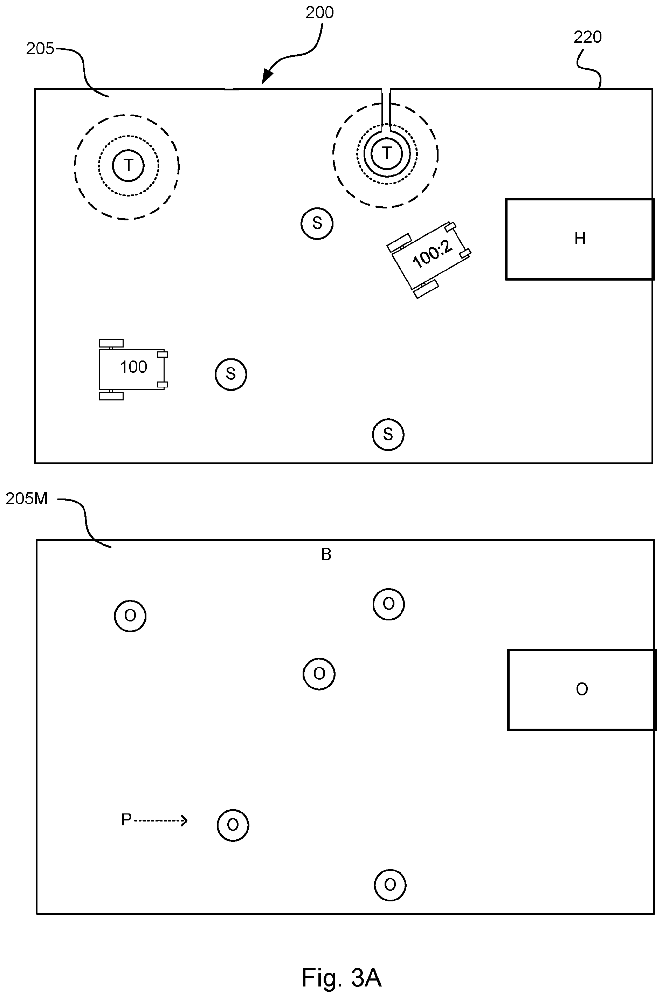

Figure 3A shows a simplified view of a robotic lawnmower system 200 in an operational area 205 as in figure 2 and a corresponding map 205M of the operational area 205. As indicated above, the map 205M may be stored in the memory 120 of the robotic lawnmower 100, in the memory 240B of a server 240 (not shown in figure 3A) or a combination of the two memories. Likewise, the map 205M may be generated, modified or updated by the controller 110 of the robotic lawnmower 100, by the controller 240A of a server 240 (not shown in figure 3A) or a combination of the two.

Figure 3A shows how a robotic lawnmower 100 operates in an operational area 205. The operational area 205 comprises a number of features, which in this example, are two trees referenced T, three stones referenced S and a house referenced H. The operational area is also enclosed by a boundary 220, which may be virtual, magnetic, optical or any combination thereof, the boundary also being an example of a feature.as a skilled person would understand, these features are only examples and the teachings herein apply also to other types of features.

Similarly, the map 205M comprises representations of these features at the same locations, and in the illustrated example, no difference is made between the various features and they are simply referred to as obstacles O. However, it should be noted that in some embodiments, the type of feature may also be stored in the map 205M for all, some or each feature to enable a more complex navigation taking into account the nature or type of features.

As a skilled person would understand, figure 3A shows a graphical representation of the map 205M and the map may not be in a visual form and may, in some embodiments, only comprise positional information for various features, such as coordinates and extensions for various features.

In figure 3A, the current position P of the robotic lawnmower 100 is also indicated along with a current heading of the robotic lawnmower 100 indicated by the dashed arrow. Although the position and the heading are not technically part of the map 205M, but rather something kept track of by the controller when using the map 205M, such as navigating according to the map 205M, they are shown in figure 3A in relation to the map for illustrative purposes. And, in some embodiments, the map 205M may be configured to also keep track of the position, the trajectory, and/or the heading as well as possibly past such data items for the robotic lawnmower 100.

As mentioned above, the mapping may be done by the controller 110 of the robotic lawnmower 100, or by the controller 240A of the server 240 or by the two controllers in combination. However, reference will only be given to the controller 110 of the robotic lawnmower 100 performing the determinations discussed herein and in particular below, but it should be understood that the teachings apply equally to the determinations being made by the controller 240A of the server 240 or by the two controllers in combination.

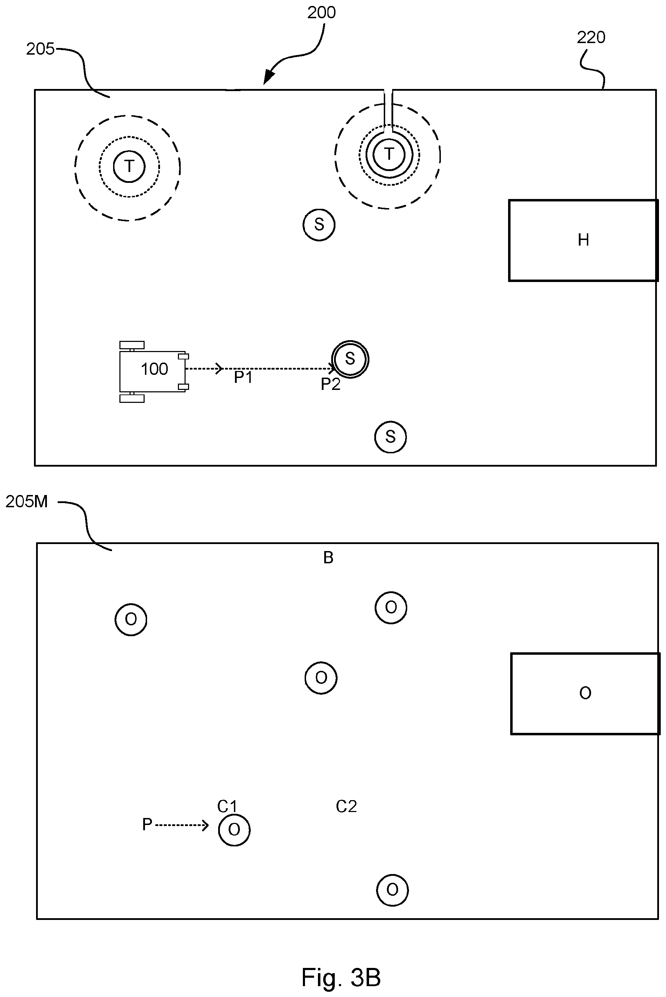

Figure 3B also shows a schematic view of a robotic lawnmower system 200, an operational area 205 and a corresponding map 205M as in figure 3A. However, in the example situation of figure 3B, one feature, in this example a stone S, has been moved. For illustrative purposes, the feature moved has been highlighted by being double circled.

This change may be detected in two ways; i) by the robotic lawnmower 100 not experiencing a collision at an expected position giving rise to a map event, and ii) by the robotic lawnmower 100 experiencing a collision at an unexpected position also giving rise to a map event.

In some embodiments, the two map events may be combined and linked so as to determine that the feature has been moved. This allows for more complicated mapping keeping track of changes.

In some embodiments, the two map events may be treated individually without linking them. This allows for simplified mapping, and works well as the reason for a change is not of consequence for a remapping, only the new state.

Returning to the two map events, and how they are generated and handled. As the robotic lawnmower 100 reaches position P1, where the feature used to be, the controller 110 determines that an unexpected event occurred, in that an expected event did not occur and was not determined at an expected position, and generates a map event to that effect. The map event comprises an indication of the position of the event (such as the coordinates for the event) and, in some embodiments, an indication of the feature affected (such as an identifier for the feature). The controller 110 sets a counter, referenced C1, for the map event. In some embodiments, the counter is set for the position of where the map event was generated. In some embodiments, the counter is set for the general area of where the map event was generated. In some such embodiments, the general area is defined as being the area within an event distance of the position for the event registered. In some alternative or additional such embodiments, the general area is defined as being the area within an event distance of the position for any event registered which allows for a grouping of counters as will be discussed in further detail in the below. In some embodiments, the event distance is 1, 2, 3, 4, 5 or 10 meters or any range therein between.

As the robotic lawnmower 100 continues, it will experience a collision that is unexpected with the stone that has been moved at position P2. The controller 110 determines again that an unexpected event occurred, in that a collision was determined at an unexpected position, and generates a (second) map event to that effect. The controller sets a (second) counter for the map event at the second position P2 for the map 205M.

As is illustrated in figure 3B, the map is not updated and the feature is kept at the same position in the map 205M. This will lead to that every time the robotic lawnmower 100 reaches any of the positions P1 or P2 a new map event will be generated and a corresponding counter increased.

In some embodiments, the counter is increased to reflect the number of events generated for a position.

In some embodiments, the counter is increased to reflect a size of an area relating to the unexpected event. In some such embodiments, the area relating to the event may be determined and the counter updated accordingly, for example so that the counter is updated by the size of the area in square meters.

In some embodiments, the counter is increased to reflect the type of change. For example, an unexpected collision may be given a first weight and an unexpectedly avoided collision may be given a second weight. In such an example, the second weight may be larger than the first weight to indicate that an expected collision that does not occur is more likely to indicate a real change, than an unexpected collision, as an unexpected collision can depend on many temporary factors.

In some embodiments, the counter is increased to reflect a distance to the nearest known feature of the map, such as to a boundary, a known structure or other obstacle.

In some embodiments, the counter is increased to reflect the accuracy of the determined current position. In case the current position is not determined at a high accuracy, the counter should not be increased by as much as if the current position is determined at a low accuracy, as the current position may be wrong and there may actually not have been a change.

In some embodiments, some, any or all of these embodiments may be combined to reflect more than one aspect of the unexpected event.

As the counter exceeds a threshold value, also referred to as a map update value, the change is seen as validated and the map is updated. The controller 110 is thus configured to determine that a counter has exceeded (or reached depending on exact implementation) a map update value and in response thereto triggers an update of the map.

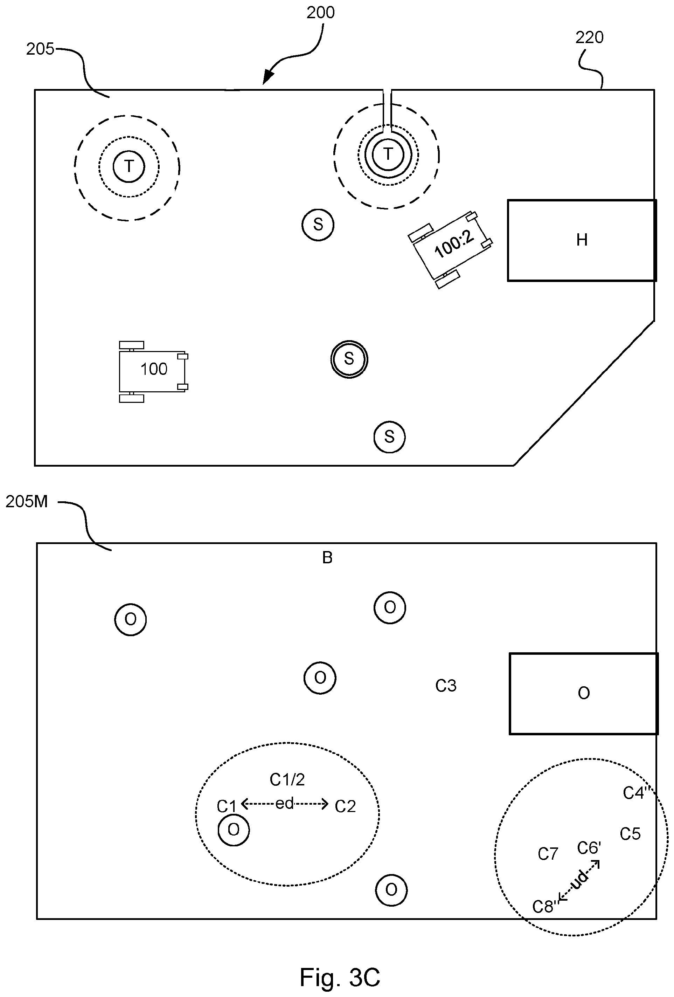

Figure 3C shows an example of a robotic lawnmower system and a map 205M, for example the system and map of figures 3A and 3B, where additional counters have been set.

As is illustrated, the two counters C1 and C2, being within the event distance ed from one another have been replaced with a combined counter C1/2. However, the counter C3 is not close enough to either of the other counters to be grouped with another counter.

In some embodiments, the controller 110 is thus configured to determine if a counter is within the event distance to another counter, and if so group the two counters thereby generating a combined counter.

In some embodiments any event being triggered for any of the counters being combined, increases the combined counter.

In some embodiments any event being triggered within the general area of the combined counter, increases the combined counter. This also includes not yet detected events that may occur in the general area of the combined counter. The general area is also referred to herein as the event area.

It should be noted that to combine two counters, both counters need not be generated, but it suffices to use the already generated counter as the combined counter.

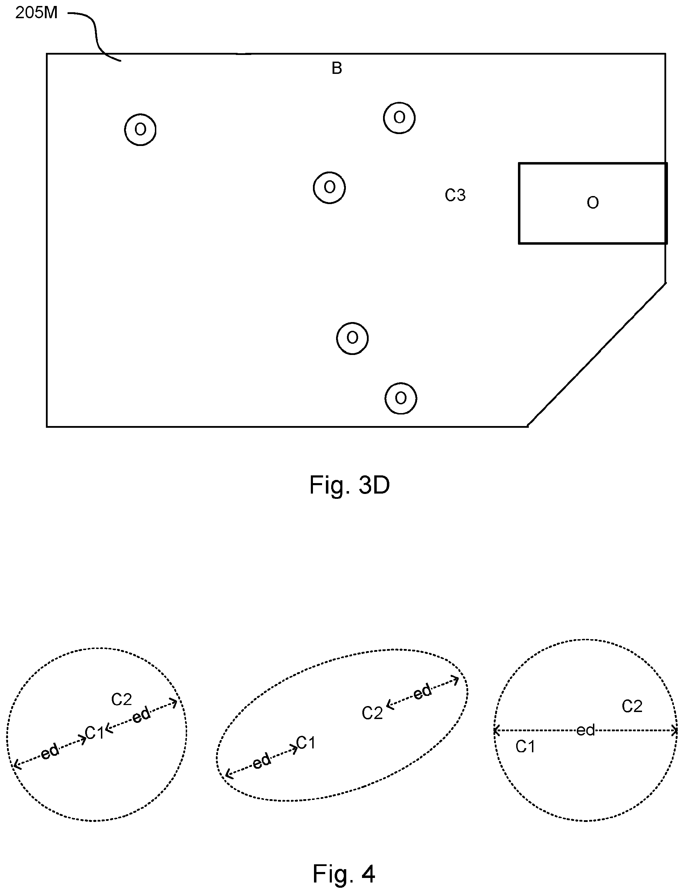

Figure 4 shows a schematic view of three different event areas (indicated by dotted ovals/circles) around combined counters.

In some embodiments, the event area of a combined counter, or for a single counter, is determined as the area within an event distance of the first triggering event, as shown to the left of figure 4.

In some embodiments, the event area of a combined counter, or for a single counter, is determined as the area within an event distance of any triggering event, as shown in the middle of figure 4.

In some embodiments, the event area of a combined counter, or for a single counter, is determined as the area within an event distance of the center of the general area, as shown to the right of figure 4.

In some embodiments, the event area is determined as including all features within an event distance of one another. This allows for regarding a group of features as one feature as it relates to detecting changes.

The combination of counters is, in some embodiments, done by the controller as a counter is set.

In some embodiments, the combination of counters is done by the controller as a counter exceeds a threshold value, also referred to as a filter value. In some embodiment, the filter value is 1, 2, 3, 4 or 5. This ensures that an event is not a simple one-off event. By filtering the one-off events, it is avoided that groups of events are expanded too quickly.

In the above, a counter has been associated with a location for an event, or an event area. However, in some embodiments, the controller 110 is configured to also keep a counter for a whole work area. Referring to figure 2, a work area may be the operational area or a portion of the operational area, and is thus representative of a larger area, possibly bounded by a boundary, but not related to other features as such.

By keeping a counter for the work area, and trigger a map update when it is determined that the area counter exceeds an update value, it is possible to determine that there are simply too many errors in general for the whole area and that something is wrong. Such a counter corresponds to all locations and may be used as an alternative to or in addition to the other counters. The robotic lawnmower may thus be set to increase more than one counter for each map event. The map update value for the area counter, may be different to the map update value for the event counters.

As a map update is triggered, the controller is, in some embodiments, configured to determine the extension of the map update.

In some embodiments, the whole map is updated.

In some embodiments, the work area of the triggering counter is updated.

In some embodiments, the event area of the triggering counter is updated.

In some embodiments, the controller is further configured to determine if there is a second counter within an update distance that is above a second update threshold - indicating that that counter is close to being validated - and include the area (work area or event area) of such a second counter in the update of the map. In some such embodiments, the controller is further configured to determine if there is a counter, an enveloped counter, between the triggering counter and the second counter (within the update distance that is above the second update threshold) and include the area (work area or event area) of such an enveloped counter in the update of the map.

In some embodiments, the update distance is the event distance. In some embodiments, the update distance is 1, 2, 5, 10 meters or any range therein between.

In some embodiments, the second update value is a fraction of the update value. In some such embodiments, the second update value is 50%, 75%, or 80% of the update value.

Returning to figure 3C, the counters C4 to C8 are shown as being within an event distance of one another, but for illustrative purposes, this will be disregarded, to focus on the determination of the extension of the update as discussed in the above.

C4 is indicated to exceed the update value by being marked with ", namely C4". C8 is also indicated to exceed the update value by being marked with ", namely C8". However, neither of C5 to C7 are exceeding the update value. C6 are, however, exceeding the second update value which is indicated by a ', namely C6'.

This allows for the update of the whole area of C4 to C8 even in embodiments that does not rely on event areas, combined counters or if the event distance is smaller than the update distance, or in other circumstances, even though only two counters triggered the update.

In some embodiments, a counter is associated with a timer. The timer may be general timer or a timer for each counter.

In some such embodiments, the controller is configured to decrease the counter each time the timer lapses. The decrease may be by a set amount (such as minus 1, 2, or 5), by a fraction (such as halving) or by resetting the counter. This enables for avoiding that different temporary changes are counted as a permanent change.

For example, the counter C3 in figure 3C being the result of a collision with the second robotic lawnmower 100:2 may be decreased after some time, so that the collision does not result in a map update.

It should be noted that herein it is discussed how a map even is generated, but it should be noted that a specific event need not be generated, and that the map event may simply be to note the location and set or increase a counter for the location.

Figure 3D shows a schematic view of a map - or rather a representation of the map - after an update. Here it can be seen that the features have been updated to reflect the changes.

By keeping the counters, it is thus possible to reduce the number of updates, as an update is not needed every time a change happens, to only update for validated changes, and to only update portions of the map that needs be updated.

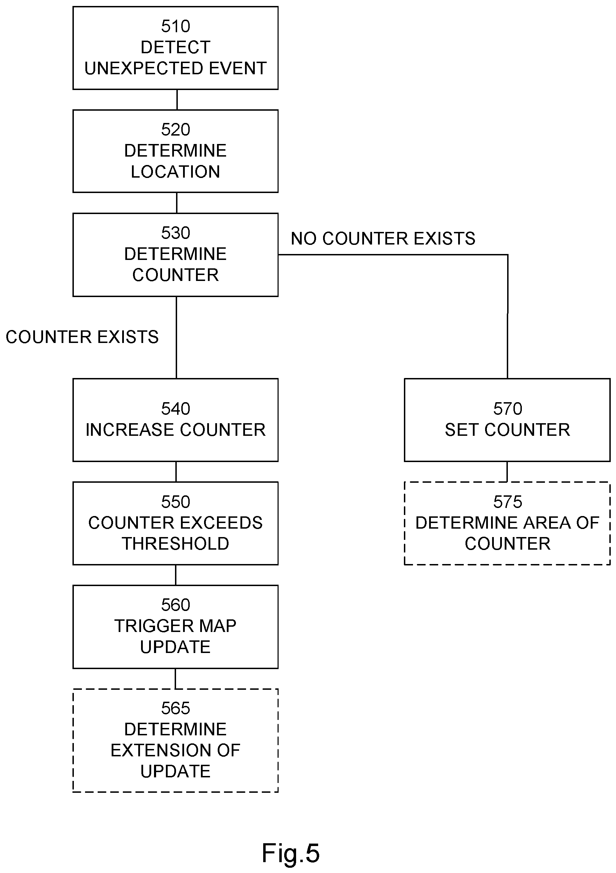

Figure 5 shows a flowchart for a general method according to herein. The method is for use in a robotic lawnmower as in figures 1A and 1B. The method comprises detecting 510 an unexpected event and determining 520 a location for the event. The method further comprises determining 530 if a counter corresponds to the location, and if so increasing 540 the counter and determining 550 if the counter exceeds an update value, and, if so, triggering 560 a map update. An extension for the update may be determined 565 to reduce the processing and bandwidth needed for the update.

And, if no counter corresponds to the location, setting 570 a counter corresponding to the location. An area for the counter may be determined 575 to be used for determining if the counter corresponds to events as discussed in the above.

A robotic lawnmower may thus in some embodiments be configured to perform the method according to figure 5 as discussed above for example in relation to figures 3A, 3B, 3C and 3D.

## Claims

1. A robotic lawnmower (100) arranged to operate in an operational area according to a map (205M), the robotic lawnmower comprising a controller, wherein the controller is configured to:
detect an unexpected event;
determine a location for the event;
determine if a counter corresponds to the location, and if so
increase the counter and
determine if the counter exceeds an update value, and, if so, trigger a map update, and if no counter corresponds to the location, set a counter corresponding to the location, and wherein the robotic lawnmower (100) is **characterized in that** the controller (110) is further configured to determine an extension of the map update by determining the extension to be the event area of the counter and to determine the extension of the map update by determining if there is a second counter within an update distance that is above a second update threshold and include the area of the second counter in the extension of the map.

2. The robotic lawnmower (100) according to claim 1, wherein the controller is further configured to determine if a counter corresponds to the location by determining if the location is within an event area of a counter.

3. The robotic lawnmower (100) according to claim 2, wherein the controller is further configured to determine the event area of a counter as the area within an event distance of a first triggering event for that counter.

4. The robotic lawnmower (100) according to claim 2, wherein the controller is further configured to determine the event area of a counter as the area within an event distance of any triggering event for that counter.

5. The robotic lawnmower (100) according to claim 2, wherein the controller is further configured to determine the event area of a counter as the area within an event distance of the center of an area encompassing triggering events for that counter.

6. The robotic lawnmower (100) according to any of claims 2 to 5, wherein the controller is further configured to determine if a counter corresponds to the location by determining if the location is within an event area of a counter and that the counter exceeds a filter value.

7. The robotic lawnmower (100) according to any preceding claim, wherein the controller is further configured to determine an extension of the map update by determining the extension to be the operational area.

8. The robotic lawnmower (100) according to any of claims 1 to 7, wherein the controller is further configured to determine an extension of the map update by determining the extension to be a work area of the counter.

9. The robotic lawnmower (100) according to claim 1, wherein the controller is further configured to determine if there is a counter, an enveloped counter, between the triggering counter and the second counter, within the update distance that is above the second update threshold, and include the area, work area or event area, of such an enveloped counter in the update of the map.

10. The robotic lawnmower (100) according to any preceding claim, wherein the counter is associated with a timer, and wherein the controller is further configured to decrease the counter each time the timer lapses.

11. The robotic lawnmower (100) according to any preceding claim, wherein the controller is further configured to increase an area counter and determine if the area counter exceeds a second update value and if so trigger a map update of the area corresponding to the area counter.

12. The robotic lawnmower (100) according to any preceding claim, wherein the unexpected event is detecting a feature at a location not recorded in the map (205M).

13. The robotic work tool robotic lawnmower (100) according to any preceding claim, wherein the unexpected event is not detecting a feature at a location recorded in the map (205M).

14. A method for use in a robotic lawnmower (100), the method comprising:
detecting an unexpected event;
determining a location for the event;
determining if a counter corresponds to the location, and if so
increasing the counter and
determining if the counter exceeds an update value, and, if so, triggering a map update, and if no counter corresponds to the location, setting a counter corresponding to the location, and wherein the method is **characterized in that** the method further comprises determining an extension of the map update by determining the extension to be the event area of the counter and determining the extension of the map update by determining if there is a second counter within an update distance that is above a second update threshold and include the area of the second counter in the extension of the map.

## Patentansprüche

1. Robotischer Rasenmäher (100), der angeordnet ist, um in einem Einsatzbereich gemäß einer Karte (205M) betrieben zu werden, der robotische Rasenmäher umfassend eine Steuerung, wobei die Steuerung konfiguriert ist zum:
Erfassen eines unerwarteten Ereignisses;
Bestimmen eines Orts für das Ereignis;
Bestimmen, ob ein Zähler dem Ort entspricht, und falls ja, Erhöhen des Zählers und
Bestimmen, ob der Zähler einen Aktualisierungswert überschreitet, und falls ja, Auslösen einer Kartenaktualisierung, und falls kein Zähler dem Ort entspricht, Einstellen eines Zähler gemäß dem Ort, und wobei der robotische Rasenmäher (100) **dadurch gekennzeichnet ist, dass** die Steuerung (110) ferner konfiguriert ist, um eine Erweiterung der Kartenaktualisierung durch das Bestimmen der Erweiterung als einen Ereignisbereich des Zählers zu bestimmen, und um die Erweiterung der Kartenaktualisierung durch das Bestimmen zu bestimmen, ob sich innerhalb einer Aktualisierungsdistanz, die über einer zweiten Aktualisierungsschwelle liegt, ein zweiter Zähler befindet, und den Bereich des zweiten Zählers in die Erweiterung der Karte einbezieht.

2. Robotischer Rasenmäher (100) nach Anspruch 1, wobei die Steuerung ferner konfiguriert ist, um zu bestimmen, ob ein Zähler dem Ort entspricht, durch das Bestimmen, ob sich der Ort innerhalb eines Ereignisbereichs eines Zählers befindet.

3. Robotischer Rasenmäher (100) nach Anspruch 2, wobei die Steuerung ferner konfiguriert ist, um den Ereignisbereich eines Zählers als den Bereich innerhalb einer Ereignisdistanz von einem ersten auslösenden Ereignis für diesen Zähler zu bestimmen.

4. Robotischer Rasenmäher (100) nach Anspruch 2, wobei die Steuerung ferner konfiguriert ist, um den Ereignisbereich eines Zählers als den Bereich innerhalb einer Ereignisdistanz von einem beliebigen auslösenden Ereignis für diesen Zähler zu bestimmen.

5. Robotischer Rasenmäher (100) nach Anspruch 2, wobei die Steuerung ferner konfiguriert ist, um den Ereignisbereich eines Zählers als den Bereich innerhalb einer Ereignisdistanz von dem Mittelpunkt eines Bereichs zu bestimmen, der auslösende Ereignisse für diesen Zähler umschließt.

6. Robotischer Rasenmäher (100) nach einem der Ansprüche 2 bis 5, wobei die Steuerung ferner konfiguriert ist, um zu bestimmen, ob ein Zähler dem Ort entspricht, durch das Bestimmen, ob sich der Ort innerhalb eines Ereignisbereichs eines Zählers befindet und dass der Zähler einen Filterwert überschreitet.

7. Robotischer Rasenmäher (100) nach einem vorstehenden Anspruch, wobei die Steuerung ferner konfiguriert ist, um eine Erweiterung der Kartenaktualisierung durch das Bestimmen der Erweiterung als den Betriebsbereich zu bestimmen.

8. Robotischer Rasenmäher (100) nach einem der Ansprüche 1 bis 7, wobei die Steuerung ferner konfiguriert ist, um eine Erweiterung der Kartenaktualisierung durch das Bestimmen der Erweiterung als einen Arbeitsbereich des Zählers zu bestimmen.

9. Robotischer Rasenmäher (100) nach Anspruch 1, wobei die Steuerung ferner konfiguriert ist, um zu bestimmen, ob sich zwischen dem auslösenden Zähler und dem zweiten Zähler innerhalb der Aktualisierungsdistanz, die über der zweiten Aktualisierungsschwelle liegt, ein Zähler, ein eingeschlossener Zähler, befindet, und den Bereich, Arbeitsbereich oder Ereignisbereich eines solchen eingeschlossenen Zählers in die Aktualisierung der Karte einbezieht.

10. Robotischer Rasenmäher (100) nach einem vorstehenden Anspruch, wobei der Zähler mit einem Zeitgeber verbunden ist und die Steuerung ferner konfiguriert ist, um den Zähler jedes Mal zu verringern, wenn der Zeitgeber abgelaufen ist.

11. Robotischer Rasenmäher (100) nach einem vorstehenden Anspruch, wobei die Steuerung ferner konfiguriert ist, um einen Bereichszähler zu erhöhen und zu bestimmen, ob der Bereichszähler einen zweiten Aktualisierungswert überschreitet, und fall ja eine Kartenaktualisierung des Bereichs auszulösen, der dem Bereichszähler entspricht.

12. Robotischer Rasenmäher (100) nach einem vorstehenden Anspruch, wobei das unerwartete Ereignis das Erfassen eines Merkmals an einem Ort ist, der nicht in der Karte (205M) aufgezeichnet ist.

13. Robotischer Rasenmäher (100) eines robotischen Arbeitswerkzeugs nach einem vorstehenden Anspruch, wobei das unerwartete Ereignis ein Nichterfassen eines Merkmals an einem Ort ist, der in der Karte (205M) aufgezeichnet ist.

14. Verfahren zur Verwendung in einem robotischen Rasenmäher (100), das Verfahren umfassend:
Erfassen eines unerwarteten Ereignisses;
Bestimmen eines Ortes für das Ereignis;
Bestimmen, ob ein Zähler dem Ort entspricht, und falls ja
Erhöhen des Zählers und
Bestimmen, ob der Zähler einen Aktualisierungswert überschreitet, und falls ja, Auslösen einer Kartenaktualisierung, und falls kein Zähler dem Ort entspricht, Einstellen eines Zähler gemäß dem Ort, und wobei das Verfahren **dadurch gekennzeichnet ist, dass** das Verfahren ferner das Bestimmen einer Erweiterung der Kartenaktualisierung durch das Bestimmen der Erweiterung als den Ereignisbereich des Zählers, und das Bestimmen der Erweiterung der Kartenaktualisierung durch das Bestimmen umfasst, ob sich innerhalb einer Aktualisierungsdistanz, die über einer zweiten Aktualisierungsschwelle liegt, ein zweiter Zähler befindet, und den Bereich des zweiten Zählers in die Erweiterung der Karte einbezieht.

## Revendications

1. Tondeuse à gazon robotisée (100) conçue destinée à fonctionner dans une zone opérationnelle conformément à une carte (205M), la tondeuse à gazon robotisée comprenant un dispositif de commande, dans laquelle le dispositif de commande est configuré pour :
détecter un événement inattendu ;
déterminer un lieu de l'événement ;
déterminer si un compteur correspond à l'emplacement et, le cas échéant, augmenter le compteur et
déterminer si le compteur dépasse une valeur de mise à jour et, le cas échéant, déclencher une mise à jour de la carte, et si aucun compteur ne correspond à l'emplacement, définir un compteur correspondant à l'emplacement, et dans lequel la tondeuse à gazon robotisée (100) est **caractérisée en ce que** le dispositif de commande (110) est en outre configuré pour déterminer une extension de la mise à jour de la carte en déterminant que l'extension est la zone d'événement du compteur et pour déterminer l'extension de la mise à jour de la carte en déterminant s'il existe un second compteur dans une distance de mise à jour qui est supérieure à un second seuil de mise à jour et comporter la zone du second compteur dans l'extension de la carte.

2. Tondeuse à gazon robotisée (100) selon la revendication 1, dans laquelle le dispositif de commande est en outre configuré pour déterminer si un compteur correspond à l'emplacement en déterminant si l'emplacement se trouve dans une zone d'événement d'un compteur.

3. Tondeuse à gazon robotisée (100) selon la revendication 2, dans laquelle le dispositif de commande est en outre configuré pour déterminer la zone d'événement d'un compteur comme étant la zone située à l'intérieur d'une distance d'événement d'un premier événement de déclenchement pour ce compteur.

4. Tondeuse à gazon robotisée (100) selon la revendication 2, dans laquelle le dispositif de commande est en outre configuré pour déterminer la zone d'événement d'un compteur comme étant la zone située à l'intérieur d'une distance d'événement de tout événement déclencheur pour ce compteur.

5. Tondeuse à gazon robotisée (100) selon la revendication 2, dans laquelle le dispositif de commande est en outre configuré pour déterminer la zone d'événement d'un compteur comme étant la zone située à l'intérieur d'une distance d'événement du centre d'une zone englobant des événements de déclenchement pour ce compteur.

6. Tondeuse à gazon robotisée (100) selon l'une quelconque des revendications 2 à 5, dans laquelle le dispositif de commande est en outre configuré pour déterminer si un compteur correspond à l'emplacement en déterminant si l'emplacement se trouve dans une zone d'événement d'un compteur et que le compteur dépasse une valeur de filtrage.

7. Tondeuse à gazon robotisée (100) selon l'une quelconque revendication précédente, dans laquelle le dispositif de commande est en outre configuré pour déterminer une extension de la mise à jour de la carte en déterminant que l'extension est la zone opérationnelle.

8. Tondeuse robotisée (100) selon l'une quelconque des revendications 1 à 7, dans laquelle le dispositif de commande est en outre configuré pour déterminer une extension de la mise à jour de la carte en déterminant que l'extension est une zone de travail du compteur.

9. Tondeuse robotisée (100) selon la revendication 1, dans laquelle le dispositif de commande est en outre configuré pour déterminer s'il existe un compteur, un compteur enveloppé, entre le compteur de déclenchement et le second compteur, dans la distance de mise à jour qui est supérieure au second seuil de mise à jour, et comporter la zone, la zone de travail ou la zone d'événement, d'un tel compteur enveloppé dans la mise à jour de la carte.

10. Tondeuse à gazon robotisée (100) selon l'une quelconque revendication précédente, dans laquelle le compteur est associé à une minuterie, et dans laquelle le dispositif de commande est en outre configuré pour diminuer le compteur à chaque fois que la minuterie est dépassée.

11. Tondeuse à gazon robotisée (100) selon l'une quelconque revendication précédente, dans laquelle le dispositif de commande est en outre configuré pour augmenter un compteur de zone et déterminer si le compteur de zone dépasse une deuxième valeur de mise à jour et, le cas échéant, déclencher une mise à jour de la carte de la zone correspondant au compteur de zone.

12. Tondeuse à gazon robotisée (100) selon l'une quelconque revendication précédente, dans laquelle l'événement inattendu est la détection d'un élément à un emplacement non enregistré sur la carte (205M).

13. Outil de travail robotisé tondeuse à gazon robotisée (100) selon l'une quelconque revendication précédente, dans lequel l'événement inattendu est la non-détection d'un élément à un emplacement enregistré dans la carte (205M).

14. Procédé pour utilisation dans une tondeuse à gazon robotisée (100), le procédé comprenant :
la détection d'un événement inattendu ;
la détermination du lieu de l'événement ;
la détermination si un compteur correspond à l'emplacement, et dans le cas échéant,
l'augmentation du compteur et
la détermination si le compteur dépasse une valeur de mise à jour et, le cas échéant, le déclenchement d'une mise à jour de carte, et si aucun compteur ne correspond à l'emplacement, la définition d'un compteur correspondant à l'emplacement, et dans lequel le procédé est **caractérisé en ce que** le procédé comprend en outre la détermination d'une extension de la mise à jour de carte en déterminant l'extension comme étant la zone d'événement du compteur et la détermination de l'extension de la mise à jour de carte en déterminant s'il y a un second compteur dans une distance de mise à jour qui est supérieure à un second seuil de mise à jour et comporter la zone du second compteur dans l'extension de la carte.
